# EUROPEAN PATENT APPLICATION

(11) **EP 1 603 345 A2**
(43) Date of publication of application: **07.12.2005**
(21) Application number: 05252442.8
(22) Date of filing: 19.04.2005
(51) Int. Cl.: H04Q 1/06, H04Q 1/14, H01R 9/24

(54) **Modular communications shelf system and methods for using the same**

(30) Priority: 01.06.2004 US 858513
(71) Applicant: Commscope Solutions Properties, LLC, Sparks, NV 89431 (US)
(72) Inventor: Keith, Scott M., Richardson, Texas 75080 (US); Gordon, William A., Allen, Texas 75002 (US); Miller, Timothy C., McKinney, Texas 75070 (US); Hulsey, James R., Canton, Georgia 30115 (US)
(74) Representative: Horner, Martin Grenville

(57) **Abstract**

A modular shelf system (100) for use with an equipment support structure (20) to manage cables has opposed front and rear sides (100A,100B). The shelf system (100) includes a base member (110) adapted to be secured to the equipment support structure and first and second drawers mounted on the base member in side-by-side relation. Each of the first and second drawers (140,140A,140B) is adapted to receive at least one cable from the rear side of the shelf system. Each of the first and second drawers includes a front panel (160) located adjacent the front side of the shelf system and defines a cable port. Each of the first and second drawers is slidable between a first, stored position within the base member and an open position wherein the respective drawer is disposed forwardly of and at least partially withdrawn from the base member to provide access from the front side of the shelf system to a cable or cables introduced into the respective drawer from the rear side of the shelf system.

## Description

### Field of the Invention

The present invention relates to shelves and, more particularly, to shelves for equipment racks where cables are terminated.

### Background of the Invention

Many businesses and the like employ one or more racks or cabinets that hold electronic equipment and/or interconnection or patch panels. A typical rack includes a pair of parallel, vertical rails or uprights spaced apart some distance, commonly a standard width of 19, 23 or 30 inches. The vertical rails may be maintained upright by a base and/or attachment to a floor or other suitable structure. The rack or racks may be mounted in a communications closet, for example.

Patch panels mounted on such racks may serve to connect various transmission media to each other and to incoming and outgoing lines using connectors, for example, mounted to the patch panels. Patch panels typically incorporate a series or array of connectors for interconnecting the various transmission media. Transmission media, such as copper wires, may be mounted to the rear side of the patch panel (and the rack) and terminated by connectors such as plug receiving jacks that are exposed at the front side of the patch panel (and the rack) through ports in the patch panel. Further transmission media, such as copper wires and including patch or jumper cords, may likewise be terminated with connectors such as plugs and mated with the jacks from the front side of the patch panel.

From time to time, it may be desirable or necessary to modify the connections at the patch panel. For example, it may be necessary to terminate additional cables from the rear side of the patch panel or to rearrange the cables. However, in some cases it may be difficult or inconvenient to access the rear of the patch panel from the rear of the rack.

### Summary of the Invention

According to embodiments of the present invention, a modular shelf system for use with an equipment support structure to manage cables has opposed front and rear sides. The shelf system includes a base member adapted to be secured to the equipment support structure and first and second drawers mounted on the base member in side-by-side relation. Each of the first and second drawers is adapted to receive at least one cable from the rear side of the shelf system. Each of the first and second drawers includes a front panel located adjacent the front side of the shelf system and defines a cable port. Each of the first and second drawers is slidable between a first, stored position within the base member and an open position wherein the respective drawer is disposed forwardly of and at least partially withdrawn from the base member to provide access from the front side of the shelf system to a cable or cables introduced into the respective drawer from the rear side of the shelf system.

According to further embodiments of the present invention, a cable management system includes an equipment support structure and a modular shelf system having opposed front and rear sides. The shelf system includes a base member secured to the equipment support structure and first and second independent drawers mounted on the base member in side-by-side relation. Each of the first and second drawers is adapted to receive at least one cable from the rear side of the shelf system. Each of the first and second drawers includes a front panel located adjacent the front side of the shelf system and defining at least one cable port. Each of the first and second drawers is slidable between a first, stored position within the base member and an open position wherein the respective drawer is disposed forwardly of and at least partially withdrawn from the base member to provide access from the front side of the shelf system to a cable or cables introduced into the respective drawer from the rear side of the shelf system.

According to further embodiments of the present invention, a system for use with an equipment support structure to manage cables comprises a drawer.
The drawer includes a carrier and a front panel. The carrier has a front side and is adapted to receive at least one cable. The front panel is removably and replaceably mounted on the front side of the carrier and defines a cable port.

According to further method embodiments, a method for managing cables includes providing a drawer including a carrier having a front side and adapted to receive at least one cable and a first front panel removably and replaceably mounted on the front side of the carrier and defining a cable port. The first front panel is removed from the carrier. The first front panel or a second front panel is installed on the front side of the carrier.

According to additional method embodiments of the present invention, a method for managing cables includes providing a modular shelf system having opposed front and rear sides. The shelf system includes a base member adapted to be secured to the equipment support structure and first and second drawers. Each of the first and second drawers includes a front panel defining a cable port. The method further includes: securing the base member to an equipment support structure, mounting the first and second drawers on the base member in side-by-side relation such that each of the front panels of the first and second drawers is slidable between a first, stored position within the base member and an open position wherein the respective drawer is disposed forwardly of and at least partially withdrawn from the base member, routing a cable into the first drawer from the rear side of the shelf system and connecting the cable to the cable port of the first drawer, and sliding the first drawer between the stored position and the open position to provide access from the front side of the shelf system to the cable connected to the cable port of the first drawer.

According to further embodiments of the invention, a modular shelf system for use with an equipment support structure to manage cables has opposed front and rear sides and the shelf system includes a base member adapted to be secured to the equipment support structure and a drawer mounted on the base member.
The drawer defines a drawer cavity adapted to receive at least one cable from the rear side of the shelf system. The drawer includes a front panel located adjacent the front side of the shelf system and defines a cable port. The drawer is slidable between a first, stored position within the base member and a removed position wherein the drawer is disposed forwardly of and fully withdrawn from the base member to provide access from the front side of the shelf system to a cable or cables introduced into the drawer from the rear side of the shelf system.

Objects of the present invention will be appreciated by those of ordinary skill in the art from a reading of the figures and the detailed description of the preferred embodiments which follow, such description being merely illustrative of the present invention.

### Brief Description of the Drawings

**Figure 1** is a fragmentary, perspective view of a cable management system according to embodiments of the present invention.
**Figure 2** is a fragmentary, perspective view of the cable management system of **Figure 1** wherein a drawer forming a part thereof is in an open position.
**Figure 3** is an exploded, perspective view of a modular shelf system forming a part of the cable management system of **Figure 1.**
**Figure 4** is a front, enlarged, exploded, perspective view of a drawer forming a part of the modular shelf system of **Figure 3.**
**Figure 5** is a rear, enlarged, exploded, perspective view of the drawer of **Figure 4.**
**Figure 6** is a top plan view of the drawer of **Figure 4.**
**Figure 7** is an enlarged, fragmentary, cross-sectional view of the drawer of the modular shelf system of **Figure 3** taken along the line 7-7 of **Figure 6.**
**Figure 8** is a fragmentary, top plan view of the modular shelf system of **Figure 3.**
**Figure 9** is an enlarged, fragmentary, cross-sectional view of the modular shelf system of **Figure 3** taken along the line **9-9** of **Figure 8.**

### Detailed Description of Embodiments of the Invention

The present invention now is described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

In the drawings, the thickness of lines, layers and regions may be exaggerated for clarity. It will be understood that when an element is referred to as being "on" another element, it can be directly on the other element or intervening elements may also be present. In contrast, when an element is referred to as being "directly on" another element, there are no intervening elements present. It will be understood that when an element is referred to as being "connected" or "attached" to another element, it can be directly connected or attached to the other element or intervening elements may also be present. In contrast, when an element is referred to as being "directly connected" or "directly attached" to another element, there are no intervening elements present.

As used herein, the term "and/or" includes any and all combinations of one or more of the associated listed items.

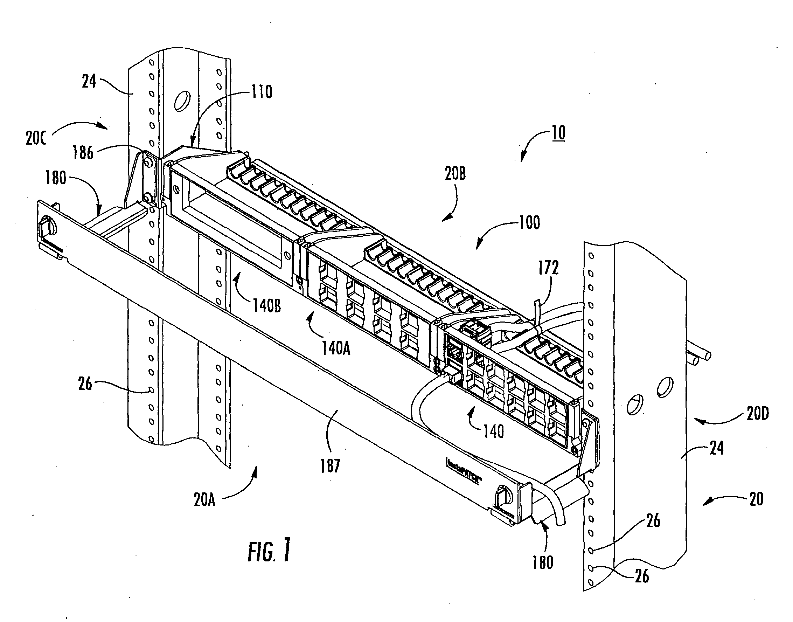

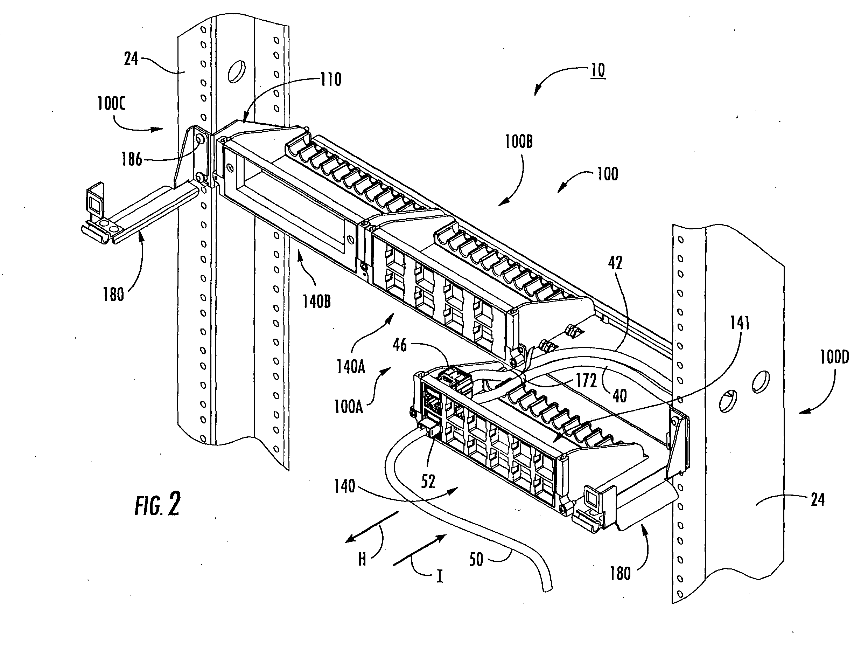

With reference to **Figures 1** and **2,** a cable management system **10** according to embodiments of the present invention is shown therein. The cable management system **10** includes a rack **20** and a modular shelf system **100** according to embodiments of the invention mounted on the rack **20.** As discussed in more detail below, the cable management system **10** may be used to manage and interconnect a plurality of cables such as signal cables, power cables and the like. According to embodiments of the invention, the cable management system **10** may be particularly suitable and beneficial for providing convenient access to rear mounted or rear entry cables and connections from the front of the system so that all connections can be performed from the front.

The rack **20** includes two spaced apart vertical rails or uprights **24.** The uprights **24** may be secured to and extend upwardly from either end of a base (not shown) that rests on an underlying support surface. The uprights **24** have apertures **26** that enable structures to be mounted thereon via mounting brackets or other mounting components. As indicated in **Figure 1,** the rack **20** has a front side **20A,** a rear side **20B,** a left side **20C,** and a right side **20D.** An exemplary rack is a product no. 55053-X03 rack, available from Chatsworth Products, Inc. of Chatsworth, CA. Exemplary shelves and other structures and components that may be mounted on the rack **20** include patch panels, wire and cable management equipment and telecommunications equipment. Those skilled in this art will recognize that other support structures may also be employed to mount the shelves of the present invention.

The modular shelf system **100** as shown includes generally a base member **110,** a first drawer **140,** a second drawer **140A,** a third drawer **140B,** a pair of cable management brackets **180** and a guard member **187.** As indicated in **Figure 2,** the modular shelf system **100** has a front side **100A,** a rear side **100B,** a left side **100C,** and a right side **100D** corresponding to the front side **20A,** the rear side **20B,** the left side **20C,** and the right side **20D,** respectively, of the rack **20.**

As best seen in **Figures 1, 8** and **9,** the base member **110** includes a horizontally extending bottom wall **112,** a pair of opposed upstanding side walls **114,** and an upstanding rear wall or flange **116.** As best seen in **Figure 9,** the flange **116** can be a bent or rolled panel. Holes **117** are formed in the flange **116** and are open to the front of the base member **110.** The walls **112, 114,** the flange **116** and a front edge **120** of the base member **110** together define a storage region or cavity **122.**

Attachment flanges **124** extend laterally outwardly from the side walls **114** to overlap the respective vertical rails **24** of the rack **20.** Apertures **125** are formed through the flanges **124** and configured to align with selected ones of the apertures **26** so that the base member **110** can be rigidly and securely mounted on the rack **20.**

Grounding lugs **130** extend from the rear of the base member **110.** Drawer guides **132** protrude upwardly from the bottom wall **112.** Upstanding retainer tabs **134** are located adjacent the front edge **120.** Apertures **134A** are formed in the retainer tabs **134.**

The base member **110** can be formed of any suitable material, including polymeric and/or metal material. According to some embodiments, the base member **110** is formed of a relatively strong metal. According to more particular embodiments, the base member **110** is formed of sheet steel or sheet aluminum. The drawer guides **132** can be lanced (for metal) or molded into the base member **110.** The base member **110** can be formed by any suitable method *(e.g.,* stamping).

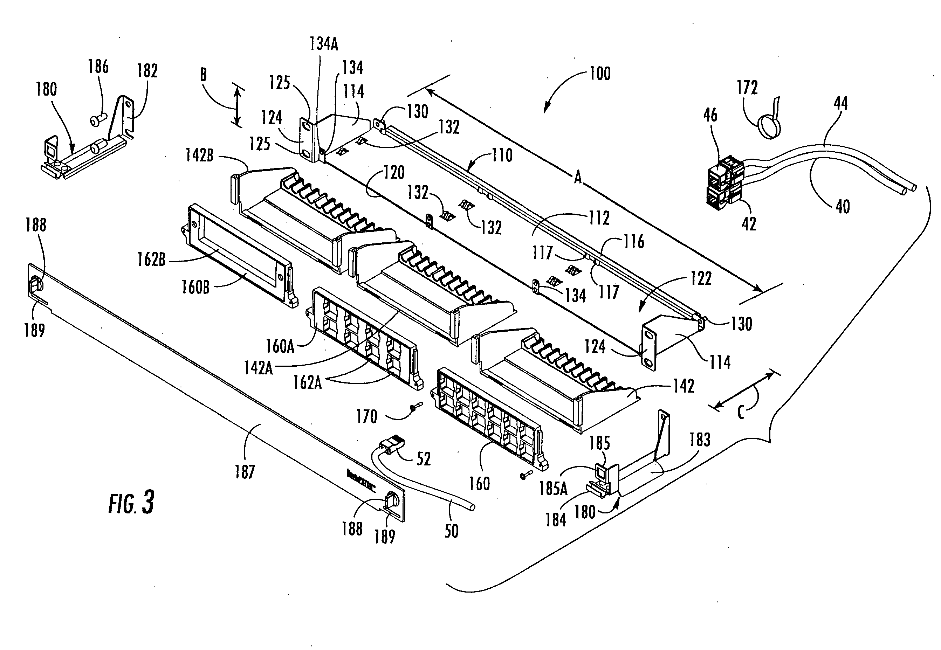

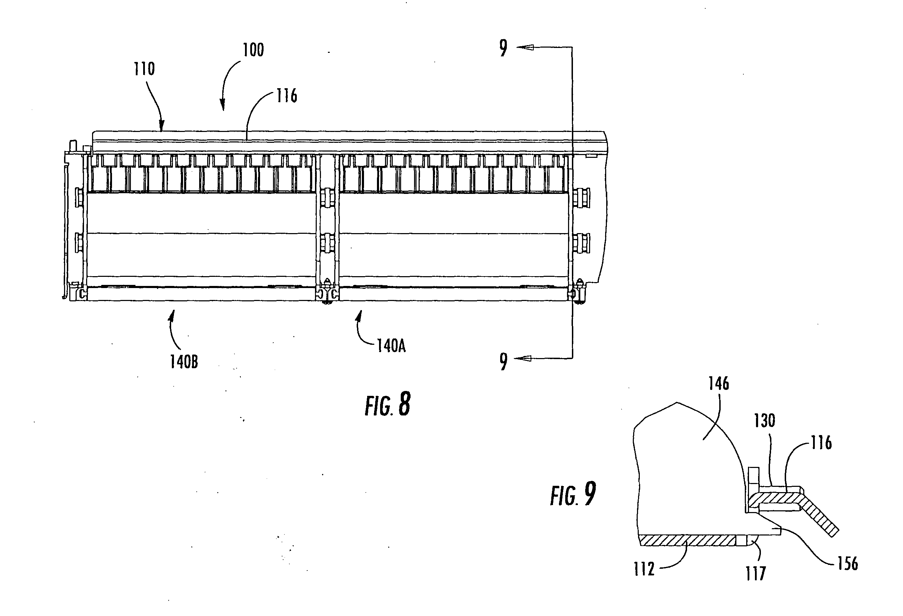

The width **A (Figure 3)** of the base member **110** at the side walls **114** may be selected so as to allow the base member **110** to be easily inserted between the uprights **24.** According to some embodiments, the width **A** is between about 17.6 and 17.7 inches (for use with a 19 inch rack), between about 21.6 and 21.7 inches (for use with a 23 inch rack), or between about 28.6 and 28.7 inches (for use with a 30 inch rack). According to some embodiments, the overall height **B (Figure 3)** of the base member **110** is between about 1.7 and 3.5 inches. According to some embodiments, the depth **C (Figure 8)** of the cavity **122** is between about 2 and 4 inches.

The first drawer **140** includes a carrier **142** and a front panel **160.** As illustrated and described below, the carrier **142** and the front panel **160** can be separable components. According to other embodiments (not shown), the carrier **142** and the front panel **160** may be unitary and inseparable. The carrier **142** and the front panel **160** define a drawer cavity **141 (Figure 2).**

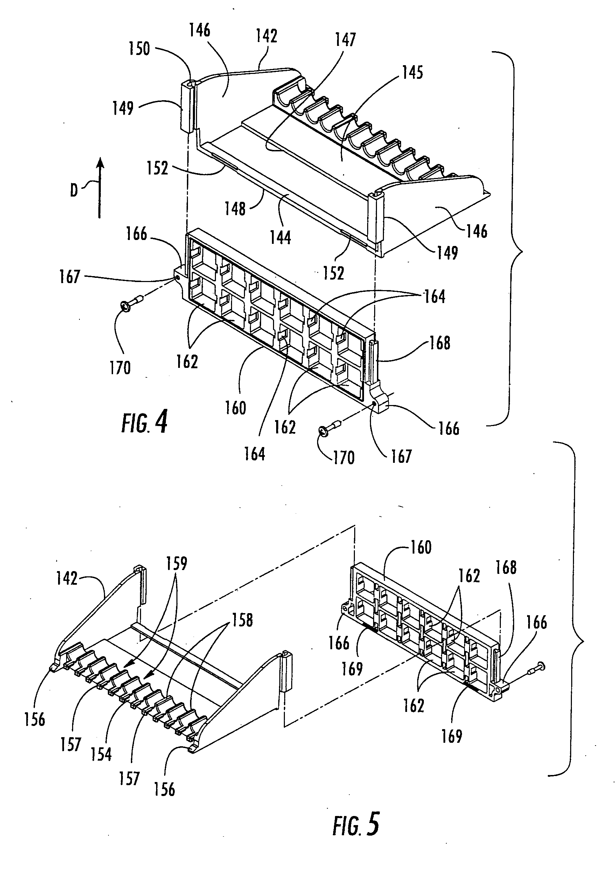

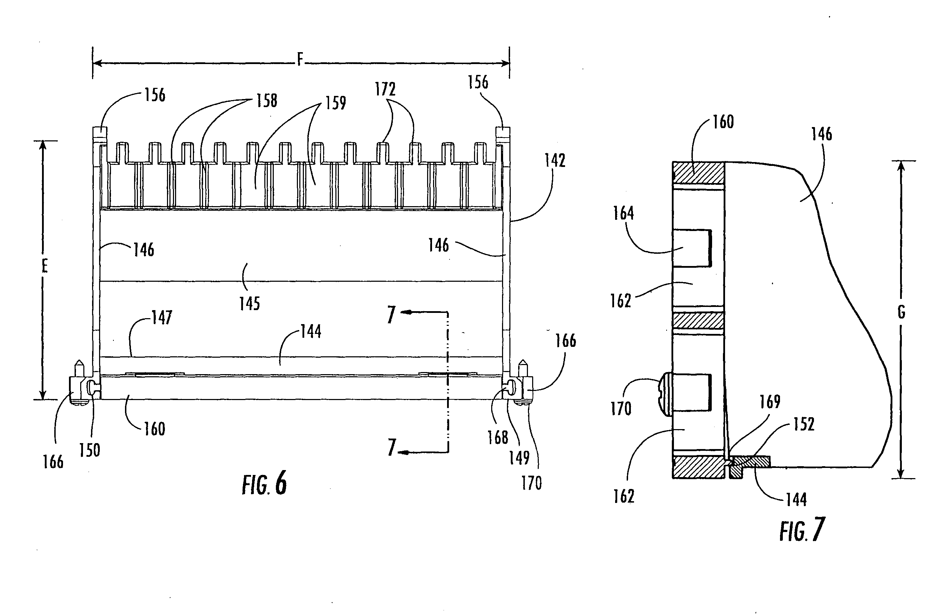

Referring to **Figures 4** and **5,** the carrier **142** includes a first horizontally extending bottom wall **144,** a second horizontally extending bottom wall **145,** and opposed upstanding side walls **146** and has a front end **148.** The bottom walls **144, 145** define a bottom opening **147** therebetween. The bottom opening **147** may provide clearance for rear entry jacks and may provide access to allow removal of jacks from the bottom side of the drawer. Tabs **149** extend from the front edges of the side walls **146** and have vertically extending T-shaped channels **150** formed therein. Recesses **152** are formed in the bottom wall **144** along the front end **148.** Rear tabs **156** extend rearwardly from the rear end **154** of the carrier **142.** A plurality of parallel partitions **158** are located adjacent the rear end **154** and define a plurality of troughs **159.** The troughs **159** each have an arcuate profile in lateral cross-section. Tie hooks **172** extend rearwardly and downwardly from the rear end **154** of the carrier **142** behind each trough **159.**

The front panel **160** has a plurality of cable ports or termination sites **162** defined therein. Latch recesses **164** or other interlocking or securing structures can be formed in or adjacent the ports **162.** A pair of extensions **166** extend laterally outwardly from opposed sides of the front panel **160.** A hole **167** is formed in each of the extensions 166. Integral rails **168** extend vertically along the opposed side edges of the front panel **160.** Interlock protuberances **169** extend rearwardly from the rear face of the front panel **160** adjacent its lower edge.

The carrier **142** and the front panel **160** may be formed of any suitable material, for example, a polymeric or metal material. According to some embodiments, the carrier **142** and the front panel **160** are preferably formed of a polymeric material. According to more particular embodiments, the carrier **142** and the front panel **160** are formed of polycarbonate, PC-ABS or conductive polymers. The carrier **142** and the front panel **160** may be formed of the same or different materials. The front panel **160** may be metallized for shielded applications. For example, the front panel **160** may be metallized to provide EMI-RF shielding and/or to provide electrical continuity between the housings of the jacks in the front panel and electrical ground (*e.g.*, via the shelf and the rack). The metallization may be provided in or on the front panel **160** by any suitable technique, for example, electroless coating, electroplated coating, conductive paint, and/or vacuum metallizing.

According to some embodiments, the drawer **140** has a depth **E (Figure 6),** not including the tabs **156,** of between about 3.25 and 3.75 inches. According to some embodiments, the drawer **140** has a width **F (Figure 6)** of between about 5.5 and 6 inches. According to some embodiments, the drawer **140** has a height **G (Figure 7)** of between about 1.70 and 1.75 inches.

With reference to **Figures 4-7,** the front panel **160** is mounted on the carrier **142** by sliding the front panel 160 up as indicated by the arrow **D (Figure 4)** such that the rails **168** slide into the channels **150** until the protuberances **169** interlock with the recesses **152** (as best seen in **Figure 7).** In this manner, the integral drawer assembly **140** is formed.

Before or after mounting the front panel **160** on the carrier **142,** the carrier **142** can be mounted on the base member **110** by sliding the carrier **142** between a selected pair of the drawer guides **132** until the rear tabs **156** are received in the corresponding holes **117.** With the front panel **160** mounted on the carrier **142,** screws **170** are threaded through each of the holes **167** and into the apertures **134A** of the retainer tabs **134.**

Referring to **Figure 3,** the drawer **140A** includes a carrier **142A** and a front panel **160A** and the drawer **140B** includes a carrier **142B** and a front panel **160B.** The carriers **142A, 142B** can be constructed in the same manner as described above for the carrier **142.** The front panels **160A, 160B** can be constructed in the same manner as described above for the front panel **160** except, as illustrated, the front panels **160A, 160B** may be provided with a different configuration of cable ports **162A, 162B.** The drawers **140A, 140B** can be assembled and installed in the base member **110** in the same manner as the drawer **140.**

With reference to **Figure 3,** the cable management brackets **180** each include an attachment flange **182** by which the brackets **180** are secured to the vertical rails **24** by screws **186.** A curved or arcuate wall or fin **183** extends laterally outwardly and downwardly from each bracket **180.** A hinge feature **184** and a latch post **185** are formed on a front end of each bracket **180.** A hole **185A** is defined in each latch post **185.**

The guard member **187** is secured to the front ends of the brackets **180** by rotatable latches **188** that engage the holes **185A.** The guard member **187** has hinge holes **189** that are received in the hinge features **184** so that the guard member **187** can be pivoted downwardly when the latches **188** are released. Alternatively, the guard member **187** can be fully removed from the brackets **180** when the latches **180** are released.

In use, one or more cables can each be routed from the rear side **100B** of the shelf system **100** (and the rear side **20B** of the rack **20),** through a respective one of the carriers **142, 142A, 142B** and to a port **162, 162A, 162B** of the associated front panel. One or more cables can each be routed from the front side **100A** of the shelf system **100** (and the front side **20A** of the rack **20)** to a respective one of the ports **162, 162A, 162B** to operatively (*e.g.*, electrically or optically) connect with a cable routed from the rear side **100B** of the shelf system **100.** Any number of such cables may be routed, subject to the port capacity of the front panels **160, 160A,** and **160B.** For the purposes of explanation, rear cables **40, 44,** and a front cable **50** as shown in **Figures 1-3** will be described hereinafter. However, it will be appreciated that other and additional cables may be accommodated.

Referring to **Figure 1,** the cables **40, 44** are routed from the rear side of the rack 20 and terminated by connector jacks **42, 46** (*e.g.*, RJ-45 jacks) that are each releasably secured in one of the ports **162** by the latch recesses **164.** The cables **40, 44** are routed through the drawer cavity **141** and positioned in respective troughs **159.** The cables **40, 44** are secured to the carrier **142** and in the troughs **159** by one or more ties **172** *(e.g.,* zip ties), clips, or the like that loop around the hooks **157.** The carrier **142** (and the troughs **159** in particular) and the ties **172** (along with the hooks **157)** serve to manage the cables **40, 44.** With the possible exception of bringing the cables from the rear of the rack **20** to the carrier **142,** the entirety of the installation as just described can be accomplished from the front side of the rack **20** and the shelf system **100.**

The front cable **50** (*e.g.*, a patch or jumper cable) is terminated by a connector plug **52** that is releasably inserted into the jack **42** from the front side of the rack **20** and the shelf system **100.** The cable **50** is routed over one of the brackets **180** so that it does not obfuscate the front of the rack **20** and the components mounted thereon. If desired, the cable **50** can be tied or otherwise secured to the bracket **180.**

In **Figure 1,** the shelf system **100** is shown with all three of the drawers **140, 140A, 140B** in a stored position. In the stored position, the drawers **140, 140A, 140B** are securely retained in the storage cavity **122** of the base member **110** to provide a neat and efficient combined patch panel. The drawers **140, 140A, 140B** are held in place by the screws **170,** the guides **132,** and the engagement of the tabs **156** with holes **117** (see **Figure 9),** which together prevent both translational and pivoting movement of the drawers **140, 140A, 140B** relative to the base member **110.**

When an operator desires to access the rear of a front panel, for example, the front panel **160,** the operator can gain convenient access to the interior of the drawer **140** from the front side of the shelf system **100** and the rack **20.** The operator can remove the screws **170** securing the drawer **140** to the tabs **134.** Thereafter, the drawer **140** can be slid forwardly (*i.e.*, in a direction **H** as indicated in **Figure 2)** from the base member **110** into an open position as shown in **Figure 2.** The drawer **140** can be withdrawn as far as desired, either partially or fully to remove the drawer **140** from the base member **110** entirely. The ties **172** help to prevent the cables **40, 44** from being pulled from the ports **162** as the drawer **140** is withdrawn. The operator can disconnect, reconnect, remove and/or add cables to the ports **162** of the front panel **160** from the rear of the front panel **160** as desired. Upon completion, the operator can push the drawer **140** rearwardly (i. e., in a direction **I** as indicated in **Figure 2)** into the stored position as shown in **Figure 1** and resecure the drawer **140** with the screws **170.**

The drawers **140, 140A, 140B** can each be secured, released, and moved to the stored and opened positions independently of one another. Thus, if modification to only a cable connection or cable connections in the drawer **140A** is required, this can be accomplished by opening the drawer **140A** while leaving the drawers **140** and **140B** in the stored position. Alternatively, if necessary or desirable, two or more of the drawers can be opened at the same time. Also, one or more of the drawers **140, 140A, 140B** can be removed and replaced with another drawer. This may be desirable if a drawer is damaged or the operator wishes to replace it with a drawer having a different front panel configuration or other features. This aspect of embodiments of the present invention may provide substantial flexibility, convenience and efficiency in cable management. For example, by allowing one or more drawers to remain in place, the need to disconnect cables connected to the front side of such drawers may be obviated.

The shelf system **100** provides further convenience and flexibility by allowing for selection and removal and replacement of the front panels **160, 160A** and **160B.** The interchangeability of the front panels allows a single drawer to be reconfigured without affecting other drawers in the shelf. The front panels may be interchanged to support various types of communications products (*e.g.*, copper and/or fiber optics) and/or to change port density. The shelf can be easily and inexpensively reconfigured as requirements change over time. If an operator desires a different configuration or type of port arrays for one of the drawers or across the entire base member **110,** the operator need only remove the screws **170** and slide the front panel off of its associated carrier. This may be particularly beneficial where it is desired to mix different types of connections and cables, for example, copper and fiber optic, on a common shelf. The operator can customize the shelf by swapping entire drawers and/or front panels.

The ports **162, 162A, 162B** can be configured to operably engage multiple types of connectors to support various types of communication products (*e.g.*, copper or fiber optic). The ports may have a standardized or proprietary configuration. According to some embodiments, the ports are configured as disclosed in U.S. Patent No. 5,096,439 to Arnett, the disclosure of which is incorporated hereby by reference. The connectors may be configured to connect multiple cables on one side of the front panel to a single cable on the opposing side of the front panel.

Those skilled in this art will appreciate that the base member **110,** the drawers **140, 140A, 140B** and other components of the cable management system **10** may take different forms than those discussed herein. For example, the drawers may be releasably secured in the base member **110** by one or more latch mechanisms in addition to or in place of the screws **170.** The front panels can be releasably secured to the carriers by other mechanisms, or may be permanently secured (*e.g.*, integrally molded with) the carriers. The front bottom wall **144** may be omitted or truncated. The shelf system may include greater or fewer than three drawers. The drawers may be different dimensions from one another. Some of the drawers may not operate fully independently of the others. For example, the shelf system may be configured such that pulling out a first drawer causes a second drawer to pull out with the first drawer, but pulling out the second drawer does not pull out the first drawer. Multiple shelf systems **100** can be mounted on a single rack **20.**

The ties **172** and/or the hooks **157** may be replaced with other cable holding structures. For example, integral or separate clips may be provided or holes may be formed in the carriers to receive the ties **172.**

The shelf systems discussed herein can be employed with any suitable data carrying or power carrying media, such as copper and/or coaxial cable, twisted pair cable, fiber optic cable and the like. Also, the shelf systems of the present invention may be used with other types of equipment support structures, such as filing cabinets or kitchen cabinets.

While connector jacks **42, 46** and plug **52** are described and illustrated herein, any suitable termination devices may be employed for the cables. For example, other types of termination devices that may be used include S-video, RCA, coax (*e.g.*, BNC, TNC, F-type, etc.) or fiber optic (*e.g.*, SC, ST, FC, etc.)

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the invention.

## Claims

1. A modular shelf system for use with an equipment support structure to manage cables, the shelf system having opposed front and rear sides and comprising:
a) a base member adapted to be secured to the equipment support structure; and
b) first and second drawers mounted on the base member in side-by-side relation, wherein:
each of the first and second drawers is adapted to receive at least one cable from the rear side of the shelf system;
each of the first and second drawers includes a front panel located adjacent the front side of the shelf system and defines a cable port; and
each of the first and second drawers is slidable between a first, stored position within the base member and an open position wherein the respective drawer is disposed forwardly of and at least partially withdrawn from the base member to provide access from the front side of the shelf system to a cable or cables introduced into the respective drawer from the rear side of the shelf system.

2. The shelf system of Claim 1 wherein each of the first and second drawers is removably mounted on the base member.

3. The shelf system of Claim 1 including a third drawer mounted on the base member in side-by-side relation with the first and second drawers, wherein:
the third drawer is adapted to receive at least one cable from the rear side of the shelf system;
the third drawer includes a front panel located adjacent the front side of the shelf system and defines a cable port; and
the third drawer is slidable between a first, stored position within the base member and an open position wherein the third drawer is disposed forwardly of and at least partially withdrawn from the base member to provide access from the front side of the shelf system to a cable or cables introduced into the third drawer from the rear side of the shelf system.

4. The shelf system of Claim 1 wherein each of the first and second drawers includes a carrier and the front panel of each of the first and second drawers is removably mounted on the carrier thereof.

5. The shelf system of Claim 4 wherein each of the first and second drawers includes a lock structure operative to removably and replaceably secure the front panel thereof to the carrier thereof.

6. The shelf system of Claim 1 wherein the front panels of the first and second drawers have different configurations of cable ports from one another.

7. The shelf system of Claim 1 wherein at least one of the front panels includes a plurality of cable ports defined therein.

8. The shelf system of Claim 1 wherein at least one of the front panels is metallized.

9. The shelf system of Claim 1 including at least one retaining structure to releasably secure each of the first and second drawers to the base member in the stored position.

10. The shelf system of Claim 1 including at least one anchoring structure configured to limit pivoting of each of the first and second drawers relative to the base member when the first and second drawers are in the stored position.

11. The shelf system of Claim 1 wherein the base member includes at least one drawer guide configured to guide the first and second drawers as they are slid between the stored and open positions.

12. The shelf system of Claim 1 including at least one cable management member positioned forwardly of the front panels and adapted to receive and support a cable or cables extending from one or more of the front panels.

13. The shelf system of Claim 12 including a guard member connected to the base member via the at least one cable management member and spaced apart forwardly from the front panels when the first and second drawers are in the stored position.

14. The shelf system of Claim 1 wherein each of the first and second drawers includes a plurality of partitions defining a plurality of troughs adapted to receive and manage a plurality of cables introduced into the respective drawer from the rear side of the shelf system.

15. The shelf system of Claim 14 wherein each of the troughs has an arcuate profile.

16. The shelf system of Claim 1 wherein each of the first and second drawers includes a holding structure adjacent the rear side of the shelf system and adapted to secure the cable or cables to the respective drawer.

17. The shelf system of Claim 1 wherein the base member is adapted to extend horizontally between and attach to laterally spaced apart, vertical support members of the equipment support structure.

18. The shelf system of Claim 1 wherein each of the first and second drawers defines a drawer cavity.

19. A cable management system comprising:
a) an equipment support structure; and
b) a modular shelf system having opposed front and rear sides and comprising:
1) a base member secured to the equipment support structure; and
2) first and second independent drawers mounted on the base member in side-by-side relation, wherein:
each of the first and second drawers is adapted to receive at least one cable from the rear side of the shelf system;
each of the first and second drawers includes a front panel located adjacent the front side of the shelf system and defining at least one cable port; and
each of the first and second drawers is slidable between a first, stored position within the base member and an open position wherein the respective drawer is disposed forwardly of and at least partially withdrawn from the base member to provide access from the front side of the shelf system to a cable or cables introduced into the respective drawer from the rear side of the shelf system.

20. The cable management system of Claim 19 wherein each of the first and second drawers is removably mounted on the base member.

21. The cable management system of Claim 19 wherein each of the first and second drawers includes a carrier and the front panel of each of the first and second drawers is removably mounted on the carrier thereof.

22. The cable management system of Claim 19 wherein the front panels of the first and second drawers have different configurations of cable ports from one another.

23. The cable management system of Claim 19 wherein at least one of the front panels is metallized.

24. The cable management system of Claim 19 including at least one retaining structure to releasably secure each of the first and second drawers to the base member in the stored position.

25. The cable management system of Claim 19 wherein each of the first and second drawers defines a drawer cavity.

26. The cable management system of Claim 19 including at least one cable management member positioned forwardly of the front panels and adapted to receive and support a cable or cables extending from one or more of the front panels.

27. The cable management system of Claim 26 including a guard member connected to the base member via the at least one cable management member and spaced apart forwardly from the front panels when the first and second drawers are in the stored position.

28. The cable management system of Claim 19 wherein the equipment support structure includes a pair of laterally spaced apart, vertical support members and the base member extends horizontally between and is attached to the vertical support members.

29. The cable management system of Claim 19 including:
a) a termination device removably mounted in the cable port of the first drawer; and
b) a cable extending into the first drawer from the rear side of the shelf system and operatively terminated at the termination device.

30. The cable management system of Claim 29 including:
a) a second termination device;
b) a second cable operatively terminated at the termination device; and
c) wherein the second termination device removably engages the first termination device from the front side of the shelf system to operatively connect the first and second cables.

31. A system for use with an equipment support structure to manage cables, the system comprising a drawer including:
a) a carrier having a front side and adapted to receive at least one cable; and
b) a front panel removably and replaceably mounted on the front side of the carrier and defining a cable port.

32. The system of Claim 31 further including a base member adapted to be secured to the equipment support structure, wherein the drawer is mounted on the base member.

33. The system of Claim 31 including a lock structure operative to removably and replaceably secure the front panel to the carrier.

34. The system of Claim 31 including a plurality of cable ports defined therein.

35. The system of Claim 31 wherein the front panel is metallized.

36. The system of Claim 31 wherein the carrier includes a plurality of partitions defining a plurality of troughs adapted to receive and manage a plurality of cables introduced into the respective drawer from a rear side of the drawer.

37. The system of Claim 36 wherein each of the troughs has an arcuate profile.

38. A modular shelf system for use with an equipment support structure to manage cables, the shelf system having opposed front and rear sides and comprising:
a) a base member adapted to be secured to the equipment support structure; and
b) a drawer mounted on the base member, wherein:
the drawer defines a drawer cavity adapted to receive at least one cable from the rear side of the shelf system;
the drawer includes a front panel located adjacent the front side of the shelf system and defines a cable port; and
c) wherein the drawer is slidable between a first, stored position within the base member and removed position wherein the drawer is disposed forwardly of and fully withdrawn from the base member to provide access from the front side of the shelf system to a cable or cables introduced into the drawer from the rear side of the shelf system.

39. A method for managing cables, the method comprising:
a) providing a modular shelf system having opposed front and rear sides and comprising:
1) a base member adapted to be secured to the equipment support structure; and
2) first and second drawers, wherein each of the first and second drawers includes a front panel defining a cable port; and
b) securing the base member to an equipment support structure;
c) mounting the first and second drawers on the base member in side-by-side relation, such that:
the front panels of the first and second drawers are located adjacent the front side of the shelf system; and
each of the first and second drawers is slidable between a first, stored position within the base member and an open position wherein the respective drawer is disposed forwardly of and at least partially withdrawn from the base member;
d) routing a cable into the first drawer from the rear side of the shelf system and connecting the cable to the cable port of the first drawer; and
e) sliding the first drawer between the stored position and the open position to provide access from the front side of the shelf system to the cable connected to the cable port of the first drawer.

40. The method of Claim 39 including retaining the second drawer in the stored position during the step of sliding the first drawer between the stored position and the open position.

41. The method of Claim 39 further including:
a) routing a second cable into the second drawer from the rear side of the shelf system and connecting the second cable to the cable port of the second drawer; and
b) sliding the second drawer between the stored position and the open position to provide access from the front side of the shelf system to the second cable connected to the cable port of the second drawer.

42. The method of Claim 39 including removing the first drawer from the base member.

43. The method of Claim 39 wherein each of the first and second drawers includes a carrier and the front panel of each of the first and second drawers is removably mounted on the carrier thereof.

44. The method of Claim 39 including mounting at least one cable management member forwardly of the front panels and routing a cable or cables from the one or more of the front panels over the cable management member such that the cable or cables are received and supported thereby.

45. The system of Claim 39 wherein the first drawer includes a plurality of partitions defining a plurality of troughs, the method further including routing a plurality of cables from the rear side of the shelf system and through respective ones of the troughs.

46. The system of Claim 39 wherein securing the base member to the equipment support structure includes attaching the base member to laterally spaced apart, vertical support members of the equipment support structure such that the base member extends horizontally between the vertical support members.

47. A method for managing cables, the method comprising:
a) providing a drawer including:
a carrier having a front side and adapted to receive at least one cable; and
a first front panel removably and replaceably mounted on the front side of the carrier and defining a cable port;
b) removing the first front panel from the carrier; and
c) installing the first front panel or a second front panel on the front side of the carrier.

48. The method of Claim 47 wherein the first and second front panels have different configurations of cable ports from one another.
